# EUROPEAN PATENT APPLICATION

(11) **EP 4 742 387 A1**
(43) Date of publication of application: **13.05.2026**
(21) Application number: 24838767.2
(22) Date of filing: 08.07.2024
(51) Int. Cl.: H01M 50/152

(54) **BATTERY CELL COVER PLATE STRUCTURE, BATTERY CELL, AND BATTERY PACK**

(30) Priority: 07.07.2023 CN 202321792606 U; 07.07.2023 CN 202321795294 U
(71) Applicant: Eve Power Co., Ltd., Jingmen, Hubei 448000 (CN)
(72) Inventor: ZHAO, Fenfen, Hubei 448000 (CN); ZHANG, Lei, Hubei 448000 (CN); LI, Qiaoying, Hubei 448000 (CN); HUANG, Liming, Hubei 448000 (CN)
(74) Representative: Berggren Oy
(86) International application number: PCT/CN2024/104208
(87) International publication number: WO 2025/011514

(57) **Abstract**

This application provides a cell cover plate structure, a cell, and a battery pack. The cover plate includes a cover body, and the outer pole is injection-molded with the cover body. The inner pole and the outer pole are arranged separately, and the inner pole is at least partially located inside the cover body and connected to the outer pole. The current collector disk is connected to the inner pole. According to this application, the inner pole structure could be designed based on the requirements for the current transfer capability of the cell and the connection strength between the current collector disk and the pole structure, so that the connection strength between the pole structure and the current collector disk and the current transfer capability of the cell could be ensured.

## Description

This application claims priority to Chinese Patent Applications No. 202321792606.4 and No. 202321795294.2 filed with China National Intellectual Property Administration on July 7, 2023, the entire contents of the foregoing applications are incorporated herein by reference.

### TECHNICAL FIELD

The present application relates to the field of battery technologies, and in particular to a cell cover plate structure, a cell, and a battery pack.

### BACKGROUND

The cell cover plate structure mainly includes a cover body and a pole arranged on the cover body, and a current collector disk is connected to a lower end of the pole. The current collector disk is arranged within the housing. Generally, the cover body and the pole are formed by injection molding, and the pole and the current collector disk are welded.

### SUMMARY

After the cover body and the pole are injection-molded, the pole structure on the inner side of the cover body is easily covered by an injection-molding material, resulting in an excessively small welding region between the pole and the current collector disk, which affects the welding structural strength between the pole and the current collector disk and also limits the current transfer capability of the cell.

The present application provides a cell cover plate structure, including: a cover body; an outer pole injection-molded with the cover body; an inner pole separated from the outer pole, where the inner pole is at least partially located on an inner side of the cover body and is connected to the outer pole; and a current collector disk connected to the inner pole.

The present application further provides a cell, including the foregoing cell cover plate structure.

The present application further provides a battery pack, including the foregoing cell.

### BENEFICIAL EFFECTS

According to the cell cover plate structure provided in the present application, the inner pole structure could be designed based on the requirements for the current transfer capability of the cell and the connection strength between the current collector disk and the pole structure during use, so that an effective connection area between the pole structure and the current collector disk could be effectively ensured, that is, the connection strength between the pole structure and the current collector disk, as well as the current transfer capability of the cell could be effectively ensured.

### BRIEF DESCRIPTION OF THE DRAWINGS

FIG. 1 is a schematic view of a three-dimensional structure of a cell cover plate structure after a sealing pin is removed according to some embodiments of the present application.
FIG. 2 is a schematic exploded view of a cell cover plate structure after a sealing pin is removed according to some embodiments of the present application.
FIG. 3 is a schematic front view of a cell cover plate structure according to some embodiments of the present application.
FIG. 4 is a schematic cross-sectional view along section A-A in FIG. 3.
FIG. 5 is a partial enlarged schematic view at B in FIG. 4.
FIG. 6 is a partial enlarged schematic view at C in FIG. 4.
FIG. 7 is another partial enlarged view at C in FIG. 4.

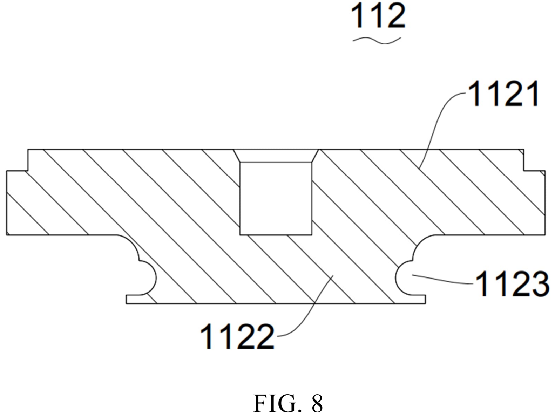

FIG. 8 is a schematic view of an outer pole according to some embodiments of the present application.

### Reference numerals:

100, cover body; 101, second through hole; 102, limiting protrusion; 103, second limiting groove; 110, pole structure; 111, inner pole; 1111, first welding portion; 1112, second welding portion; 112, outer pole; 1121, outer connection portion; 1122, inner connection portion; 1123, second clamping structure; 120, welding protrusion; 121, sealing pin; 122, first hole section; 123, second hole section; 124, liquid injection hole; 125, rounded corner; 126, limiting step; 127, mounting hole; 130, plastic insulation layer; 131, main plate; 132, upper mounting section; 133, third through hole; 134, first slot hole; 135, second slot hole; 1351, first clamping structure; 136, lower mounting section; 137, first through hole; 138, first limiting groove; 140, current collector disk.

### DETAILED DESCRIPTION

In description of the present disclosure, the terms "connection", "linking", and "fixing" should be broadly understood, for example, it may be a fixed connection, a detachable connection, or an integral connection, unless otherwise clearly specified and defined. It can be a mechanical connection or an electrical connection. The terms can refer to the internal communication between two elements or the interaction relationship between two elements. For those of ordinary skilled in the art, the specific meanings of the above terms in the present application may be understood based on specific circumstances.

In the present application, unless otherwise expressly defined and specified, the phrases, such as a first feature "above" or "below" a second feature, mean the first feature in direct contact with the second feature, or the first feature in indirect contact with the second feature by other feature(s) therebetween. Moreover, that the first feature is "over," "above" or "on" the second feature includes that the first feature directly above and obliquely above the second feature, as well as that the first feature is higher than the second feature. The expression "the first feature is under, below, and beneath the second feature" includes "the first feature is directly below or diagonally below the second feature" and "the horizontal height of the first feature is lower than that of the second feature".

In the description of the present disclosure, terms such as "above", "below", "left", "right", "front", "back" refer to the orientation or positional relationship shown in the appended drawings, and are only for the purpose of facilitating the description and simplifying of operation, rather than indicating or implying that the apparatus or component referred to must have a particular orientation or must be configured or operated in a particular orientation, therefore should not be construed as a limitation towards the present disclosure. In addition, the terms "first" and "second" are used for the purpose of distinguishing elements in terms of description of the elements and not in a particular sense.

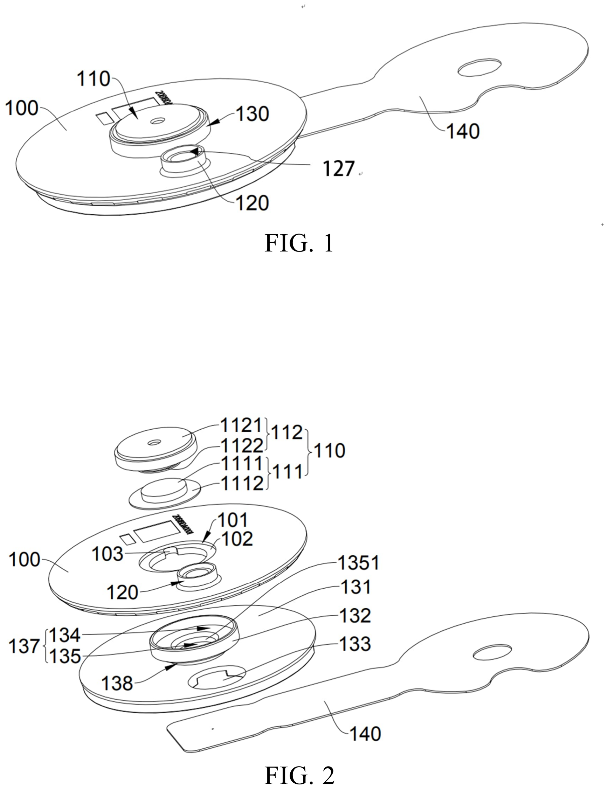

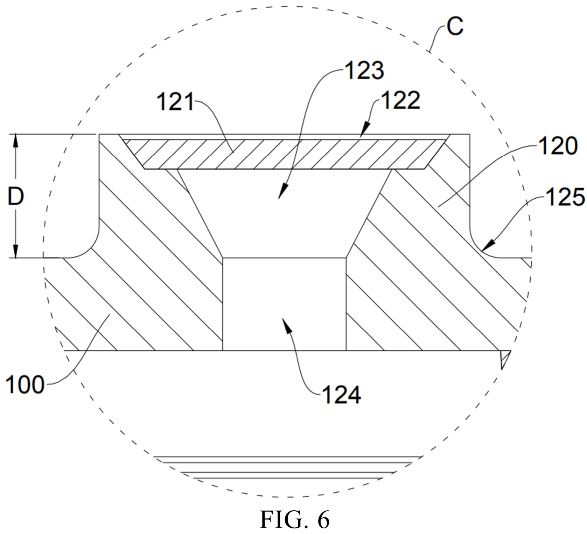

Referring to FIG. 1 to FIG. 7, a cell cover plate structure includes a cover body 100, a pole structure 110, and a current collector disk 140. In some embodiments, the pole structure 110 includes an outer pole 112 and an inner pole 111, and the outer pole 112 and the inner pole 111 are separately arranged and connected to each other. That is, the inner pole 111 and the outer pole 112 together form a pole structure 110, where the outer pole 112 is injection-molded with the cover body 100. The inner pole 111 is located inside the cover body 100 and connected to the outer pole 112. The current collector disk 140 is connected to the inner pole 111. When the pole structure 110 is injection-molded with the cover body 100, the cover body 100 and the outer pole 112 are fixed in the injection mold cavity. That is, the cover body 100 is injection-molded with the outer pole 112, then the inner pole 111 is connected to the outer pole 112, and finally the current collector disk 140 is connected to the inner pole 111. During actual use, the structure of the inner pole 111 could be designed based on the requirements for the current transfer capability of the cell and the connection strength between the current collector disk 140 and the pole structure 110, so that the effective connection area between the pole structure 110 and the current collector disk 140 could be effectively ensured, and the connection strength between the pole structure 110 and the current collector disk 140, as well as the current transfer capability of the cell could be effectively ensured.

Optionally, the outer pole 112 and the inner pole 111 are welded by laser. The inner pole 111 and the current collector disk 140 are welded by laser.

In some embodiments, a plastic insulation layer 130 is disposed between the pole structure 110 and the cover body 100. The plastic insulation layer 130 is provided with a first through hole 137 penetrating therethrough, and the pole structure 110 runs through the first through hole 137. An inner wall of the first through hole 137 is provided with a first clamping structure 1351, the pole structure 110 is provided with a second clamping structure 1123 adapted to the first clamping structure 1351, and the first clamping structure 1351 is clamped to the second clamping structure 1123. In some embodiments, optionally, the plastic insulation layer 130 is formed of an injection molding material during injection molding of the cover body 100 and the outer pole 112. The plastic insulation layer 130 here is used to insulate the cover body 100 from the pole structure 110 on the one hand, and ensure the cover body 100 being injection-molded with the pole structure 110 on the other hand. The cooperation of the first clamping structure 1351 and the second clamping structure 1123 could improve the connection strength between the pole structure 110 and the plastic insulation layer 130.

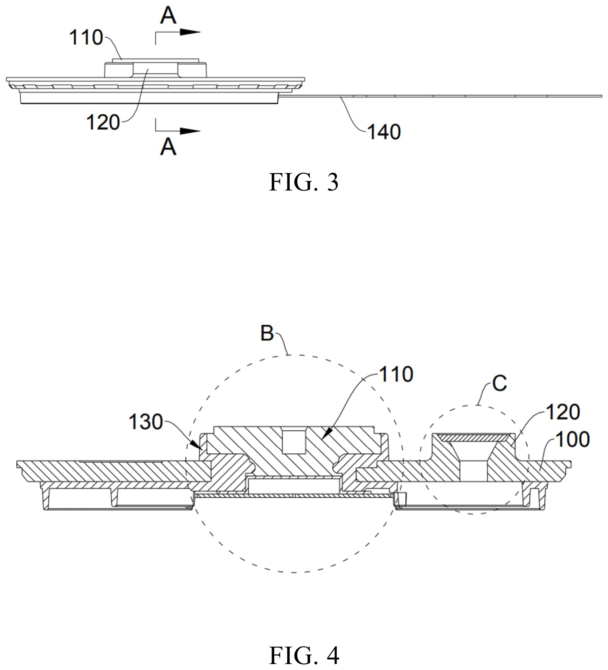

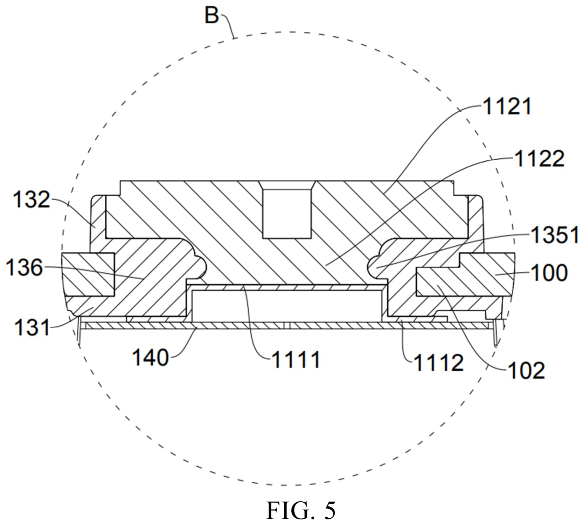

As shown in FIG. 4 and FIG. 5, the second clamping structure 1123 is a groove structure defined by the pole structure 110, and the first clamping structure 1351 is a clamping convex structure adapted to the groove structure. During the injection connection between the cover body 100 and the pole structure 110, that is, between the cover body 100 and the outer pole 112, the plastic insulation layer 130 flows into the groove structure to form a clamping convex structure. Of course, in other embodiments, the second clamping structure 1123 may be a clamping convex structure, and the first clamping structure 1351 is a groove structure adapted to the clamping convex structure. The cooperation of the groove structure and the clamping convex structure herein could effectively increase the connection area between the pole structure 110 and the plastic insulation layer 130, thereby effectively improving the connection strength between the pole structure 110 and the plastic insulation layer 130.

In some embodiments, the cover body 100 is provided with a second through hole 101 penetrating therethrough, an inner wall of the second through hole 101 is provided with a second limiting groove 103, the plastic insulation layer 130 runs through the second through hole 101, and the plastic insulation layer 130 at least partially extends to the second limiting groove 103. During the injection molding connection between the pole structure 110 and the cover body 100, the plastic insulation layer 130 flows into the second limiting groove 103, which could increase the connection area between the plastic insulation layer 130 and the cover body 100, effectively increase the connection strength between the plastic insulation layer 130 and the cover body 100, and prevent the plastic insulation layer 130 from shifting in the second through hole 101 along the circumferential direction of the second through hole 101.

In some embodiments, as shown in FIG. 2 and FIG. 5, the outer pole 112 includes an outer connection portion 1121 and an inner connection portion 1122 that are connected to each other, an outer diameter of the inner connection portion 1122 is less than an inner diameter of the outer connection portion 1121, and the inner connection portion 1122 is provided with the second clamping structure 1123. With this arrangement, the aperture of the second through hole 101 could be reduced to a certain extent, thereby ensuring the structural strength of the cover body 100. In some embodiments, the outer connection portion 1121 and the inner connection portion 1122 are integrally formed.

In some embodiments, as shown in FIG. 2 and FIG. 5, the plastic insulation layer 130 includes a main plate 131, a lower mounting section 136, and an upper mounting section 132 connected in sequence. Specifically, the main plate 131 is connected to an end of the lower mounting section 136 away from the upper mounting section 132, and the main plate 131 is disposed on a side of the cover body 100 away from the upper mounting section 132. In some embodiments, the top surface of the upper mounting section 132 is provided with a first slot hole 134, and the bottom of the first slot hole 134 is provided with a second slot hole 135. The second slot hole 135 penetrates through the upper mounting section 132 and the lower mounting section 136, and the first slot hole 134 and the second slot hole 135 together constitute a first through hole 137. The outer connection portion 1121 is adapted in the first slot hole 134, the inner connection portion 1122 is adapted in the second slot hole 135, and the inner pole 111 is inserted into the second slot hole 135 and connected to the inner connection portion 1122. In some embodiments, the first clamping structure 1351 is disposed on an inner side wall of the second slot hole 135. The main plate 131 at least partially extends along the inner side surface of the cover body 100 and is attached to the inner side surface of the cover body 100. In this way, the connection area between the plastic insulation layer 130 and the cover body 100 is increased, and the connection strength therebetween is improved.

In some embodiments, the peripheral side surface of the lower mounting section 136 is annularly provided with a first limiting groove 138. The cover body 100 is provided with a second through hole 101 penetrating therethrough, the inner wall of the second through hole 101 is annularly provided with a limiting protrusion 102 adapted to the first limiting groove 138, and the limiting protrusion 102 is embedded in the first limiting groove 138. Specifically, when the cover body 100 is injection-molded with the pole structure 110, the plastic insulation layer 130 flows along the inner wall of the second through hole 101 to cover the limiting protrusion 102, thereby forming the first limiting groove 138 to improve the connection strength between the plastic insulation layer 130 and the cover body 100.

In some embodiments, as shown in FIGS. 2 and 5, the inner pole 111 includes a first welding portion 1111 and at least one second welding portion 1112 connected to the first welding portion 1111. The first welding portion 1111 is inserted into the first through hole 137 and welded to the outer pole 112. The second welding portion 1112 is at least partially located outside the first through hole 137 and extends along the inner side surface of the plastic insulation layer 130, and the current collector disk 140 is welded to the second welding portion 1112. The first welding portion 1111 and the second welding portion 1112 are integrally formed by stamping. When in use, the connection area of the second welding portion 1112 is designed based on actual needs, that is, the area of the partial structure of the second welding portion 1112 located outside the first through hole 137 and extending along the inner side surface of the plastic insulation layer 130 is designed to ensure the connection area between the second welding portion 1112 and the current collector disk 140.

In some embodiments, the shape of the first welding portion 1111 is adapted to the first through hole 137, and is a cylindrical shape with one end closed, and the closed end of the first welding portion 1111 is embedded into the first through hole 137 and connected to the outer pole 112. The second welding portion 1112 is located at the open end of the first welding portion 1111 and annularly arranged along the open end of the first welding portion 1111. This arrangement facilitates the assembly of the inner pole 111 and welding with the outer pole 112. Specifically, the welding gun may extend into the closed end of the first welding portion 1111 through the open end of the first welding portion 1111 for welding.

Referring to FIG. 1 to FIG. 6, in some embodiments, the cover body 100 is provided with a welding protrusion 120, and the cover body 100 is provided with a liquid injection hole 124 penetrating therethrough. The welding protrusion 120 is arranged on the outer side surface of the cover body 100 and blocks the liquid inlet end of the liquid injection hole 124, the welding protrusion 120 is provided with an mounting hole for assembling the sealing pin 121, and the mounting hole is in communication with the liquid injection hole 124. In some embodiments, a third through hole 133 is provided with the main plate 131 penetrating therethrough, and the third through hole 133 is in communication with the liquid injection hole 124. The welding protrusion 120 herein extends and protrudes upward on the outer side surface of the cover body 100. During use, the electrolyte in the cell housing (not shown in the figure) is filled through the mounting hole in communication with the liquid injection hole 124, and after the electrolyte is filled, the sealing pin 121 is assembled in the mounting hole to block the mounting hole, that is, the sealing pin 121 blocks the liquid injection hole 124. The welding protrusion 120 herein could concentrate the heat generated by the sealing pin 121 during laser welding on the welding protrusion 120, that is, the heat source is away from the cover body 100, thereby preventing the cover body 100 from being damaged by heat deformation, and ensuring that the sealing pin 121 blocks the liquid injection hole 124 by laser welding while ensuring the sealing performance of the cell cover plate structure.

In some embodiments, optionally, the welding protrusion 120 and the cover body 100 are integrally injection-molded.

Optionally, a rounded corner 125 is provided at the transition connection between the peripheral side surface of the welding protrusion 120 and the outer side surface of the cover body 100. The rounded corner 125 could reduce stress concentration at the transition connection between the peripheral side surface of the welding protrusion 120 and the outer side surface of the cover body 100.

In some embodiments, the shortest distance between the top end face of the welding protrusion 120 and the outer side surface of the cover body 100 is defined as D, and D ranges from 1.5 mm to 2.5 mm, for example D is 2 mm.

As shown in FIG. 3, the mounting hole includes a first hole section 122 in communication with the liquid injection hole 124, and the first hole section 122 is a tapered hole with a large end away from the cover body 100. The first hole section 122, which is tapered with its large end away from the cover body 100, facilitates the filling of electrolyte, and facilitates the sealing and assembling of the mounting hole and the sealing pin 121.

In some embodiments, the mounting hole further includes a second hole section 123, and the first hole section 122 is in communication with the liquid injection hole 124 through the second hole section 123. A limiting step 126 is formed at a junction of the first hole section 122 and the second hole section 123. The second hole section 123 is a tapered hole with a large end away from the cover body 100. The limiting step 126 herein could cooperate with the inner side surface of the first hole section 122 to support the sealing pin 121, so as to improve the structural stability of the sealing pin 121 after being welded to the mounting hole. The tapered hole of the second hole section 123 is the same as the tapered hole of the first hole section 122, so that the electrolyte could be smoothly filled into the cell housing.

In some embodiments, as shown in FIG. 2 and FIG. 3, a top end face of the welding protrusion 120 is not higher than a top end face of the outer pole 112. The top end face of the welding protrusion 120 is lower than the top end face of the outer pole 112. With this arrangement, when the cell is assembled with the busbar assembly (not shown in the figure), the possibility of space interference between the welding protrusion 120 and the busbar assembly could be effectively reduced.

It should be noted that the schematic view of some embodiments provides a cell cover plate structure of a cylindrical cell, and it may be understood that, in other embodiments, the cell cover plate structure may be applied to a cover plate structure of other cells such as a square cell.

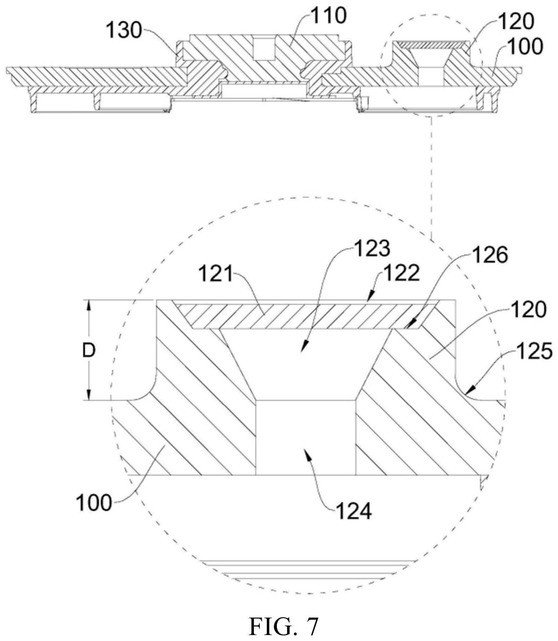

Referring to FIG. 1 to FIG. 2, in some embodiments, the cover body 100 is provided with a liquid injection hole 124 penetrates therethrough. The welding protrusion 120 protrudes from the outer side surface of the cover body 100 and is connected to the liquid inlet end of the liquid injection hole 124. The welding protrusion 120 is provided with a mounting hole 127 for assembling the sealing pin 121, and the mounting hole 127 is in communication with the liquid injection hole 124. As shown in FIG. 4 and FIG. 7, the welding protrusion 120 extends and protrudes upward on the outer side surface of the cover body 100. During use, the electrolyte in the battery housing (not shown in the figure) is filled through the mounting hole 127 in communication with the liquid injection hole 124, and after the electrolyte is filled, the sealing pin 121 is assembled in the mounting hole 127 to block the mounting hole 127, that is, the sealing pin 121 blocks the liquid injection hole 124. The welding protrusion 120 herein could concentrate the heat generated by the sealing pin 121 during laser welding on the welding protrusion 120, that is, the heat source is away from the cover body 100, thereby preventing the cover body 100 from being damaged by heat deformation, and ensuring that the sealing pin 121 blocks the liquid injection hole 124 by laser welding while ensuring the sealing performance and structural stability of the cell cover plate structure.

As shown in FIG. 2, the cell cover plate structure further includes a plastic insulation layer 130, which is injection-molded with the cover body 100. In some embodiments, the welding protrusion 120 enables the heat of sealing pin 121 during the welding to be away from the cover body 100 and the plastic insulation layer 130, so as to prevent the connection structure between the plastic insulation layer 130 and the cover body 100 from being damaged and prevent the two from being separated.

In some embodiments, optionally, the welding protrusion 120 and the cover body 100 are integrally injection-molded.

As shown in FIG. 7, the end of the first hole section 122 close to the liquid injection hole 124 forms a limiting step 126, the side of the sealing pin 121 close to the liquid injection hole 124 abuts against the limiting step 126, and the side of the sealing pin 121 away from the liquid injection hole 124 is not higher than the end face of the first hole section 122.

Some embodiments further provide a cell, including a cell cover plate structure. The current collector disk 140 and the pole structure 110 have high connection strength and high safety.

Some embodiments further provide a battery pack, including a cell. It is convenient to perform laser welding on the sealing pin 121 with good sealing performance and good structural stability.

Cell cover plate

## Claims

1. A cell cover plate structure, **characterized by** comprising:
a cover body (100);
an outer pole (112) injection-molded with the cover body (100);
an inner pole (111) separated from the outer pole (112), wherein the inner pole (111) is at least partially located inside the cover body (100) and is connected to the outer pole (112); and
a current collector disk (140) connected to the inner pole (111).

2. The cell cover plate structure of claim 1, wherein the inner pole (111) and the outer pole (112) together form a pole structure (110), and a plastic insulation layer (130) is injection-molded between the pole structure (110) and the cover body (100);
wherein a first through hole (137) is defined by and penetrates through the plastic insulation layer (130), and the pole structure (110) runs through the first through hole (137).

3. The cell cover plate structure of claim 2, wherein an inner wall of the first through hole (137) is provided with a first clamping structure (1351), the pole structure (110) is provided with a second clamping structure (1123) adapted to the first clamping structure (1351), and the first clamping structure (1351) is clamped to the second clamping structure (1123).

4. The cell cover plate structure of claim 3, wherein the second clamping structure (1123) is a groove structure, and the first clamping structure (1351) is a clamping convex structure adapted to the groove structure; or the second clamping structure (1123) is a clamping convex structure, and the first clamping structure (1351) is a groove structure adapted to the clamping convex structure.

5. The cell cover plate structure of claim 2, wherein the outer pole (112) comprises an outer connection portion (1121) and an inner connection portion (1122) integrally connected, an outer diameter of the inner connection portion (1122) is smaller than an inner diameter of the outer connection portion (1121), and the outer connection portion (1121) abuts against a side of the plastic insulation layer (130).

6. The cell cover plate structure of claim 5, wherein the plastic insulation layer (130) comprises a lower mounting section (136) and an upper mounting section (132) integrally injection-molded, wherein the upper mounting section (132) is provided with a first slot hole (134), the lower mounting section (136) is provided with a second slot hole (135), and the first slot hole (134) and the second slot hole (135) are in communication to form the first through hole (137);
wherein the outer connection portion (1121) is adapted to the first slot hole (134), and the inner connection portion (1122) is adapted to the second slot hole (135).

7. The cell cover plate structure of claim 6, wherein the plastic insulation layer (130) further comprises a main plate (131) integrally injection-molded with the lower mounting section (136) and the upper mounting section (132), the main plate (131) is connected to an end of the lower mounting section (136) away from the upper mounting section (132), and the main plate (131) is disposed on a side of the cover body (100) away from the upper mounting section (132).

8. The cell cover plate structure of claim 2, wherein the inner pole (111) comprises a first welding portion (1111) and a second welding portion (1112) connected to each other, wherein the first welding portion (1111) is inserted into the first through hole (137) and welded to the outer pole (112), the second welding portion (1112) is at least partially located outside the first through hole (137) and extends along an inner side surface of the plastic insulation layer (130), and the current collector disk (140) is welded to the second welding portion (1112).

9. The cell cover plate structure of claim 8, wherein an outer shape of the first welding portion (1111) is adapted to the first through hole (137) and is cylindrical with a closed end, the closed end of the first welding portion (1111) is embedded in the first through hole (137) and connected to the outer pole (112), and the second welding portion (1112) is located at an open end of the first welding portion (1111) and annularly arranged along the open end of the first welding portion (1111).

10. The cell cover plate structure of any one of claims 2 to 9, wherein a second through hole (101) is defined by and penetrates through the cover body (100), one of an inner wall of the second through hole (101) and the plastic insulation layer (130) is provided with a limiting protrusion (102), and another of the inner wall of the second through hole (101) and the plastic insulation layer (130) is provided with a first limiting groove (138), and the limiting protrusion (102) is embedded in the first limiting groove (138).

11. The cell cover plate structure according to any one of claims 2 to 9, wherein a second through hole (101) is defined by and penetrates through the cover body (100), an inner wall of the second through hole (101) is provided with a second limiting groove (103), the plastic insulation layer (130) runs through the second through hole (101), and the plastic insulation layer (130) at least partially extends into the limiting groove (103).

12. The cell cover plate structure of claim 1, wherein
a liquid injection hole (124) is defined by and penetrates through the cover body (100); and
the cell cover plate structure further comprises a welding protrusion (120), the welding protrusion is protruded from an outer side surface of the cover body (100) and connected to a liquid inlet end of the liquid injection hole (124), the welding protrusion (120) is provided with an mounting hole (127) for assembling the sealing pin (121), and the mounting hole (127) is in communication with the liquid injection hole (124).

13. The cell cover plate structure of claim 12, wherein the welding protrusion (120) and the cover body (100) are integrally formed.

14. The cell cover plate structure of claim 12, wherein a shortest distance between a top end face of the welding protrusion (120) and the outer side surface of the cover body (100) ranges from 1.5 mm to 2.5 mm.

15. The cell cover plate structure of claim 12, wherein the mounting hole (127) comprises a first hole section (122) in communication with the liquid injection hole (124), and the first hole section (122) is a tapered hole with a large end away from the cover body (100).

16. The cell cover plate structure of claim 15, wherein an end of the first hole section (122) close to the liquid injection hole (124) forms a limiting step (126), a side of the sealing pin (121) close to the liquid injection hole (124) abuts against the limiting step (126), and a side of the sealing pin (121) away from the liquid injection hole (124) is not higher than an end face of the first hole section (122).

17. The cell cover plate structure of claim 16, wherein the mounting hole (127) further comprises a second hole section (123), the first hole section (122) is in communication with the liquid injection hole (124) through the second hole section (123), and the limiting step (126) is formed at a junction between the first hole section (122) and the second hole section (123).

18. The cell cover plate structure of claim 17, wherein the second hole section (123) is a tapered hole with a large end away from the cover body (100).

19. The cell cover plate structure of claim 12, wherein a top end face of the welding protrusion (120) is not higher than a top end face of the outer pole (112).

20. The cell cover plate structure of claim 12, wherein a rounded corner (125) is provided at a transition connection between a peripheral side surface of the welding protrusion (120) and the outer side surface of the cover body (100).

21. The cell cover plate structure of any one of claims 12 to 20, wherein the sealing pin (121) is welded in the mounting hole (127).

22. A cell, comprising the cell cover plate structure of any one of claims 1 to 21.

23. A battery pack, comprising the cell of claim 22.
